# EUROPEAN PATENT APPLICATION

(11) **EP 4 808 070 A1**
(43) Date of publication of application: **16.09.2026**
(21) Application number: 25162671.9
(22) Date of filing: 10.03.2025
(51) Int. Cl.: H04L 45/24, H04L 69/14

(54) **OPERATING A MOBILE 3GPP COMMUNICATION NETWORK TO ENABLE COMMUNICATION WITH REDUNDANT PATHS**

(71) Applicant: Siemens Aktiengesellschaft, 80333 München (DE)
(72) Inventor: Walewski, Joachim, 82008 Unterhaching (DE)
(74) Representative: Siemens Patent Attorneys

(57) **Abstract**

The proposed embodiments facilitate an operation of communication nodes within a 3GPP mobile communication network while enabling the integration of these communication nodes into industrial communications with redundant communication paths. According to one embodiment, Protocol Data Unit or PDU sessions in a mobile communication network are configured so that the mobile communication system functions as a communication node that supports redundant communication paths. While known PDU sessions are typically utilized to provide end-to-end user plane connectivity between User Equipment or UE and a specific data network within a 3GPP mobile communication network, the present embodiments employ an extended User Plane Function (UPF) resulting in a 3GPP communication network with novel redundant connectivity options capable of participating in established industrial implementations of redundant communication paths, such as the Parallel Redundancy Protocol or PRP. The 3GPP mobile communication network or subareas of said 3GPP mobile communication network may act as a redundancy box in conformance with the PRP protocol.

## Description

### Technical Field

The disclosed embodiments pertain to the field of communications networks, particularly communication networks including redundant communication paths. More specifically, the disclosed embodiments pertain to mobile communication networks being configured for at least partial operation of redundant communication paths.

### Background Art

Industrial applications in production and critical infrastructure necessitate stringent dependability standards. In industrial settings, such as manufacturing plants, any disruption in communication can precipitate significant operational and safety concerns. For example, a communication network failure in a manufacturing plant can halt production lines, resulting in delays and financial losses. Therefore, ultra-reliable communication is imperative for industrial applications that demand high dependability. This type of communication ensures continuous and reliable operations, thereby reducing the frequency of network outages.

In order to meet these and other stringent requirements, an implementation of redundant communication paths may be necessary in certain situations. Redundancy mechanisms ensure that operations may continue uninterrupted even if one communication path fails.

Another requirement of modern manufacturing is an increasing need for wireless data exchange. Mobile networks are envisaged to support various industrial services such as cloud-based services, industrial control, autonomous driving, and mission-critical communications. Some services, such as autonomous driving, may have ultra-low latency and high data capacity requirements due to safety and performance concerns.

In response to these and other requirements, the 3rd Generation Partnership Project (3GPP) has introduced redundancy mechanisms for the fifth generation or 5G of mobile communications technology. These mechanisms are predicated on packet or frame duplication and the routing of packets or frames via orthogonal paths, meaning the data is sent through multiple, independent routes. While this development represents a significant advancement in rendering 5G mobile communications valuable for industrial applications, a notable drawback is that the introduced 5G redundancy mechanisms do not interoperate with established industrial standards for redundant communication paths, such as the Parallel Redundancy Protocol (PRP).

Accordingly, there is a need in the art to facilitate an operation of communication nodes of present and next generation 3GPP mobile communication networks while enabling their participation in industrial communications with redundant communication paths.

### Summary of the Invention

The present embodiments facilitate an operation of communication nodes within a 3GPP mobile communication network while allowing the integration of these communication nodes into industrial communication networks that utilize redundant communication paths.

According to an embodiment, a method is provided for operating a mobile 3GPP communication network to facilitate data exchange between at least three endpoints of the 3GPP communication network, with at least two endpoints being network-externally connected to redundant network paths and at least one endpoint being network-externally connected to at least one non-redundant network path, the method including the steps of:
- setting up at least one protocol data unit session by setting its session type to support Ethernet frames for data transmission and associating a specific network name for frames exchanged with one of the redundant network paths;
- receiving an incoming frame from at least one of said redundant network paths and detecting a trailer in the incoming frame to determine the incoming frame as being compliant with the redundant communication protocol;
- reading a sequence number field and a local area network identifier field of the trailer to identify and/or discard a duplicate frame;
- providing at least one detection rule to assign at least one forwarding action rule to be applied to the incoming frame.

While known PDU session are typically utilized to provide end-to-end user plane connectivity between User Equipment or UE and a specific data network within a 3GPP mobile communication network, the present embodiments extend the User Plane Function (UPF) of the mobile network, resulting in a 3GPP mobile communication network with novel redundant connectivity options capable of participating in established industrial implementations of redundant communication paths. A considerable advantage of the proposed embodiments is that they enable seamless integration of mobile 3GPP communication networks with industrial networks that require redundant communication paths. By configuring protocol data unit sessions to support Ethernet frames and comply with redundant communication protocols, the method ensures reliable and continuous data exchange even if one communication path fails.

According to an embodiment, identifying a duplicate frame includes evaluating the sequence number of the incoming frame.

According to an embodiment, evaluating the sequence number includes comparing the sequence number of the incoming frame with at least one sequence number of at least one previously incoming frame.

According to an embodiment, the following steps are included:
- receiving an incoming frame from at least one of said non-redundant network paths;
- creating a sequence number and appending a trailer to the incoming frame, the trailer including the created sequence number; and;
- creating a duplicate frame of the incoming frame, amending the local area network identifier field of the duplicate frame according to a destination network path of the duplicate frame and forwarding the incoming frame and the duplicate frame to the redundant network paths.

The local area network identifier of the duplicate frame may be modified to set a label for forwarding the duplicate frame into the opposite disjoint network path.

According to an embodiment, the redundant communication protocol is a Parallel Redundancy Protocol or PRP.

According to an embodiment, at least one parameter is adjusted, the at least one parameter assigned to a service data flow template, the at least one parameter determining a packet delay budget and/or a priority level according to an industrial setting.

By adjusting the service data flow templates within policy and charging control rules, the protocol data unit session is ensured to meet the requirements of the redundant communication protocol. By adjusting at least one parameter assigned to a service data flow template, such as the packet delay budget and/or priority level, the method ensures that the communication network meets stringent requirements of industrial settings. This embodiment allows for optimized data transmission, catering to the specific needs of industrial applications that demand high reliability and low latency.

According to an embodiment, at least one instance of a user equipment and/or or at least one instance of a user plane function is added to a virtual network group enabling a frame flow between one or more of said instances. For example, two user equipment instances may be added to a 5G virtual network group enabling UE-to-UE communication via the user plane function. The user plane function UPF may hereby be configured to utilize different traffic forwarding methods for routing traffic between the protocol data unit or PDU sessions within a single 5G virtual network group.

According to an embodiment, the protocol data unit session is configured to support a Precision Time Protocol or PTP. According to an embodiment, the proposed embodiments for a PDU session emulating a PRP redundancy box may additionally support a Precision Time Protocol in accordance with a standard IEC/IEEE 61850-9-3:2016 as edited by the International Electrotechnical Commission (IEC) and the Institute of Electrical and Electronics Engineers (IEEE), version 2016, published in May 2016, which specifies a precision time protocol (PTP) profile for power utility automation.

According to an embodiment, a redundancy box embodied by a mobile 3GPP communication network is provided, the redundancy box configured to facilitate data exchange between at least three endpoints, with at least two endpoints being network-externally connected to redundant network paths and at least one endpoint being network-externally connected to at least one non-redundant network path, the redundancy box including:
- at least one user plane function configured to set up the protocol data unit session by setting its session type to support Ethernet frames for data transmission and associating a specific network name being utilized for frames exchanged with one of the redundant network paths;
- one of said at least two endpoints configured to receive an incoming frame;
- the user plane function further configured to detect a trailer in the incoming frame to determine the incoming frame as being compliant with the redundant communication protocol, to read a sequence number field and a local area network identifier field of the trailer to identify and/or discard a duplicate frame; and;
- at least one detection rule of the user plane function for assigning at least one forwarding action rule to be applied to the incoming frame.

### Brief Description of the Drawing

The objects as well as further advantages of the present invention will become more apparent and readily appreciated from the following description of the preferred embodiments, taken in conjunction with the accompanying drawing of which:
- FIG. 1: illustrates a schematic diagram of an exemplary PRP network architecture;
- FIG. 2: illustrates a schematic diagram of an exemplary PRP redundancy box;
- FIG. 3: illustrates a structure of a PRP frame;
- FIG. 4: illustrates a structure of a PRP tag;
- FIG. 5: illustrates a schematic diagram of a mobile communication system operated as an PRP redundancy box according to a first embodiment;
- FIG. 6: illustrates a schematic diagram of a mobile communication system operated as an PRP redundancy box according to a second embodiment; and;
- FIG. 7: illustrates a schematic diagram of a mobile communication system operated as an PRP redundancy box according to a third embodiment.

### Description of Embodiments

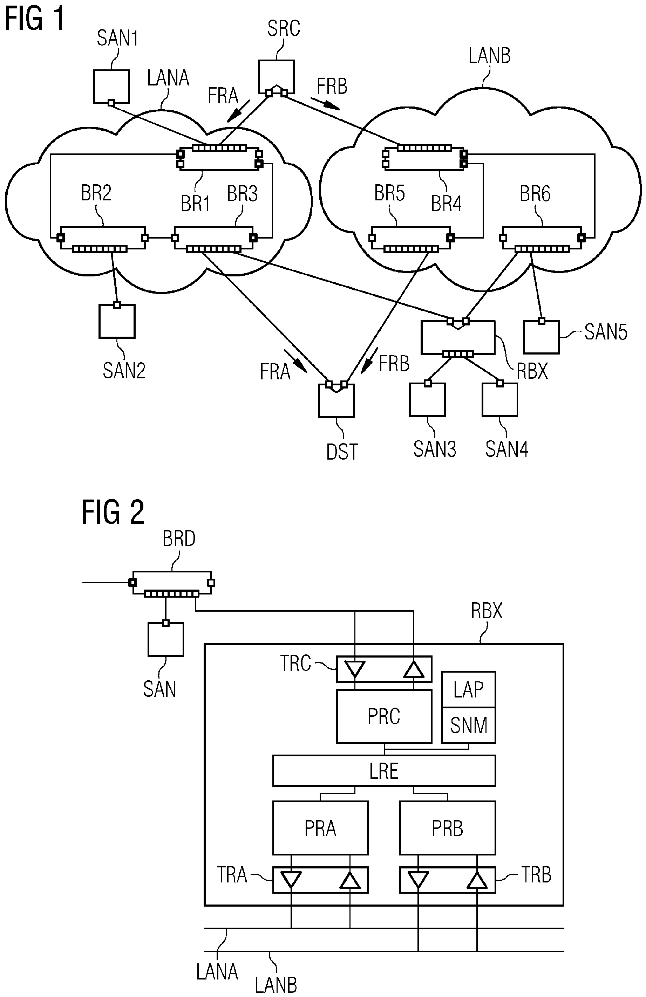

FIG. 1 represents a logical view of an exemplary Parallel Redundancy Protocol or PRP network architecture. The network consists of two networks LANA, LANB which may preferably be deployed on respectively independent hardware components. The PRP network architecture basically includes three types of entities that may connect to the PRP network:
- A singly attached node or SAN may attach to only one network. In FIG. 1 five singly attached nodes SAN1, SAN2, SAN3, SAN4, SAN5.
- A dually attached node implementing PRP may attach with two networks LANA, LANB. In FIG. 1 two dually attached nodes are shown, a first dually attached node or source node SRC and a second dually attached node or destination node DST.
- A redundancy box or »RedBox« may provide access to two networks LANA, LANB for singly attached devices. FIG. 1 shows a redundancy box RBX providing access for the third and the fourth singly attached nodes SAN3, SAN4 as shown in FIG. 1.

FIG 1 further show several bridges BR1, ..., BR6, which may facilitate data transfer between different network segments of the respective network LANA, LANB.

A redundancy RBX may generally implement the functionality of a dually attached node or source node and may additionally offer at least one port capable of communicating with non-PRP nodes, such as a singly attached node or SAN.

The High-Availability Seamless Redundancy Protocol or PRP network architecture is specified in IEC 62439-3, Edition 4.0 (2021), as edited by the International Electrotechnical Commission (IEC), pertaining to Part 3 of Industrial Communication Networks and High Availability Automation Networks and covering a Parallel Redundancy Protocol (PRP) and a High-availability Seamless Redundancy (PRP), hereinafter referred to as the IEC 62439-3 document. The standard IEC 62439-3 details protocols for ensuring seamless network redundancy and providing guidelines for implementing high-availability automation networks.

FIG. 2 illustrates an exemplary redundancy box RBX serving as a bridge for devices lacking native support of the Parallel Redundancy Protocol PRP. This includes singly attached nodes SAN or a non-PRP bridge BRD as depicted in the upper part of FIG. 2, or, more generally, non-PRP-devices of a non-redundant network. The southbound part of FIG. 2 shows redundant networks LANA, LANB being part of a redundant network.

The redundancy box RBX may allow non-PRP devices to connect to redundant networks LANA, LANB, via two transceivers TRA, TRB. These transceivers TRA, TRB bidirectionally transmit data traffic through and from respectively assigned redundant network interfaces PRA, PRB, each assigned to one of two redundant paths A and B to ensure redundancy. A link redundancy engine LRE may serve as a principal component of the redundancy box RBX. In essence, the link redundancy engine LRE may facilitate the redundant duplication of data frames in a southbound direction towards the redundant network, while ensuring de-duplication in the northbound direction towards the non-redundant network. The redundancy box RBX may interface non-redundant networks or non-PRP devices by a transceiver TRC, which may bidirectionally transmit data traffic through and from a non-redundant network interface PRC.

A local application LAP may interact with the link redundancy engine LRE to send and receive data. A protocol unit SNM may interact with the link redundancy engine LRE to enforce or process communication protocols such as TCP/IP (Transmission Control Protocol/Internet Protocol) for interconnecting network devices and/or SNMP (Simple Network Management Protocol), a protocol used to monitor and manage the network devices.

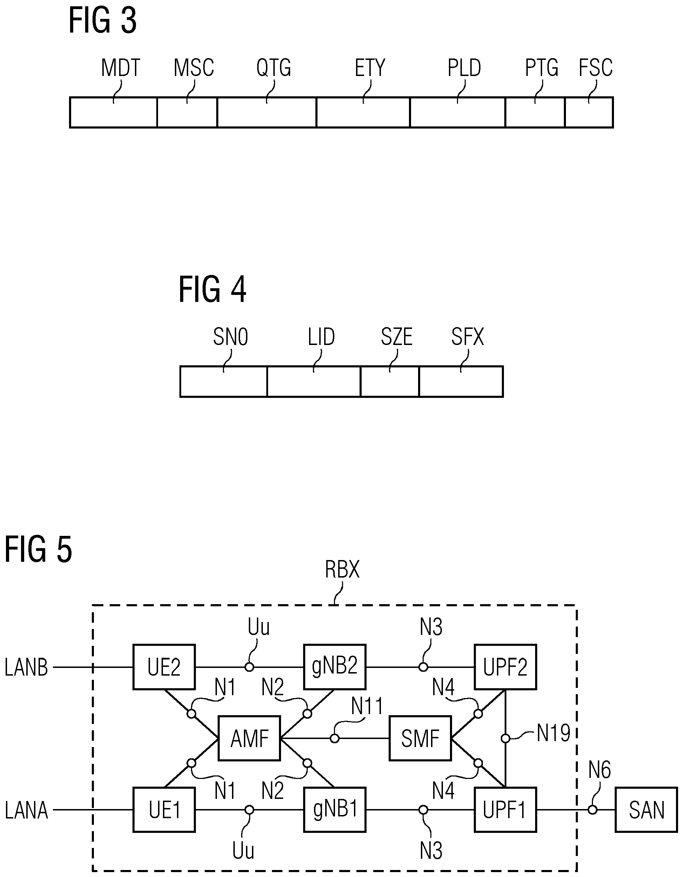

FIG. 3 illustrates a schematic structure of a PRP frame. The PRP frame essentially deviates from a standard Ethernet frame by including a PRP trailer field PTG. The other fields of the PRP frame are in conformance with an Ethernet Frame and include a destination MAC Address MDT to specify the hardware address of the recipient, a source MAC address MSC to indicate the hardware address of the sender, an optional 802.Q tag QTG to enable Virtual Local Area Network VLAN identification and traffic management, an EtherType Field ETY or Length Field to determine the type of protocol encapsulated in the payload or the length of the payload, a payload field PLD containing the actual data to be transported by the PRP frame and a frame check sequence field FSC which supports error checking of received frames by use of Cyclic Redundancy Check or CRC.

FIG. 4 illustrates a schematic structure of a PRP trailer field PTG shown in FIG. 3. The PRP trailer field PTG may include a sequence number field SNO, a local area network identifier field LID, a size field SZE and a PRP suffix SFX. The sequence number field SNO may include a unique number assigned to each frame to help identify and discard duplicate frames. Transmitted PRP frames may be numbered consecutively. Duplicates of frames may bear the same sequence number. The local area network identifier field LID may identify a first network LANA with a binary value of 1010 and a second network LANB by a binary value of 1011. More details are disclosed in section 4.1.10.2.4 of IEC 62439-3. The size field (SZE) may indicate the size of the payload, including the PRP trailer PTG. The PRP suffix SFX may identify PRP frames and distinguish PRP frames from other protocols which may also append a trailer to their payload. The PRP suffix for PRP frames may be conventionally set to 0x88FB.

Following the aforementioned introductory structural explanations, a description will now be provided - with reiterated reference to FIG. 1 - on how a frame may be handled by PRP nodes - i.e. redundancy boxes and/or dually attached nodes - in conformance with the PRP protocol. According to the Parallel Redundancy Protocol or PRP, when a standard Ethernet frame is received by a redundancy box RBX via a suitable port, the redundancy box RBX may insert a PRP trailer PTG into the Ethernet frame to result in an PRP frame. A PRP frame received by the redundancy box RBX may be duplicated by the redundancy box. One PRP frame from each duplicate may be forwarded to a first network LANA and the other PRP frame may be forwarded to the second network LANB.

A detection of PRP frames is conducted as follows: The redundancy box RBX may examine the Ethernet frame from its end to the anticipated location of the Size field. The redundancy box RBX may then compare a determined size with an actual size of a segment situated between the extended Ethernet header and the frame check sequence. Should these two values correspond, the redundancy box RBX - or more generally: the receiving PRP node of the PRP frame - presumes the frame to be a PRP frame.

According to the Parallel Redundancy Protocol or PRP, when a PRP frame is received by a PRP node such as the dually attached node SRC attached with two networks LANA, LANB, the dually attached node or source node SRC may insert a PRP trailer into frames ingressing from a - not shown - non-PRP port or the dually attached node or source node SRC, duplicate the ingressing frames and redundantly forward the duplicate frames FRA, FRB via the first and the second network LANA, LANB to the second dually attached node DST. The first PRP frame FRA to arrive at the second dually attached node DST may be stripped of its PRP trailer PTG. The later second PRP frame FRB to arrive at the second dually attached node SRC may be discarded. The second dually attached node SRC may verify that this second PRP frame is a duplicate of the first PRP frame by checking the PRP trailer and the sequence number included in the sequence field SNO shown in FIG. 4. These frames with a duplicate sequence number may then be dropped by the second dually attached node SRC.

While the foregoing description has elucidated fundamental principles of the PRP protocol, the following disclosure will now proceed to propose novel embodiments that extend its implementation to wireless and/or mobile networks being positioned along or constitute a redundant path. The embodiments may specifically allow a Mobile 3GPP Communication System to act as a PRP redundancy box. This enables a straightforward integration of 5G System into PRP networks.

The proposed embodiments discussed hereinafter, among other advantages, are capable of supplanting the traditionally wired or physical PRP nodes with PRP nodes of a more »logical« nature within a mobile 3GPP communication network. The embodiments presented hereinafter achieve the object of replicating the behavior described above for the PRP nodes - i.e. redundancy boxes and/or dually attached nodes - within a communication node of a 3GPP mobile communication network in order to advantageously enable the replacement of conventionally wired PRP nodes by communication nodes within a 3GPP mobile communication network.

FIG. 5 illustrates a schematic diagram of a mobile communication system operated as an PRP redundancy box according to a first embodiment. A dashed box RBX delineates a boundary of a mobile 3GPP communication system, which may be hereinafter also referred to as 5G system.

The dashed box RBX further outlines a redundancy box RBX being embodied by the mobile 3GPP communication network. Entities depicted within the dashed box RBX may be integral components of the 5G system. The 5G system encompasses both a user plane and a control plane, which, although not explicitly depicted in the drawing, are briefly elucidated below.

The control plane may be responsible for managing signaling and control information required to establish and maintain network connections. The control plane may primarily be represented by an access and mobility management function AMF and a session management function SMF. The session management function SMF may be responsible for managing sessions and interactions with at least one user plane function UPF1, UPF2, which is part of the user plane explained below rather than the control plane. The session management function SMF may be responsible for creating, updating, and terminating Protocol Data Unit or PDU sessions.

The user plane may be responsible for the actual transmission of user data. The user plane may handle forwarding of data frames between a user equipment and external networks or services. A central component of the user plane is its user plane function UPF, which may perform a number of tasks, including frame or packet routing and forwarding, Quality of Service (QoS) management, and packet inspection. Insofar as the present description refers to »packets« in accordance with the 3GPP terminology, it is understood that »packets« in this context may also include packets and/or frames, particularly frames as used to describe the present embodiments hereinafter.

In the following exemplary embodiments, at least one user equipment UE1, UE2 and/or user plane function UPF1, UPF2 may be instantiated, by the control plane. Consequently, there will be references to one or more instances of a user equipment UE1, UE2 or one or more instances of a user plane function UPF1, UPF2, respectively.

The PRP redundancy box RBX being embodied by the mobile communication system or 5G system RBX may interface with non-PRP nodes or networks outside the 5G system RBX such as a singly attached node SAN.

In order to enable the 3GPP or 5G system CSY within the dashed box RBX to function as a redundancy box RBX as shown in FIG. 5, the packet or frame flow according to the embodiments may be advantageously configured as follows: When the user equipment UE is setting up a PDU Session, the session type may be set to Ethernet.

According to the first embodiment as shown in FIG. 5, a first user plane function UPF1 is employed to connect to the singly attached node SAN which may be situated in a - not shown - data network. For the sake of clarity, this data network is simplified to show only one singly attached node SAN although it may of course comprise a multiplicity of nodes. The user equipment UE1, UE2 and said data network may be made members of a 5G virtual network group and packets between user plane functions UPF1, UPF2 may be forwarded via a reference point N19 as per clause 5.8.2.13 of the technical specification 3GPP TS 23.501 V19.1.0 (2024-09) as edited by the 3rd Generation Partnership Project Technical Specification, version 19.1.0, published in September 2024, hereinafter referred to as the '501 specification.

A first network LANA is connected to a first user equipment UE1 while a second user equipment UE2 is connected to a second network LANB. Together, these networks LANA, LANB form two parts of the redundant Parallel Redundancy Protocol or PRP transmission. The first user plane function UPF1 may implement a functionality of a link redundancy engine LRE as shown in FIG. 2 serving as a principal component of the redundancy box RBX.

A technical core of the embodiments is to enable the 3GPP communication network within the boundaries of the dashed box RBX to function as a PRP redundancy box. An embodiment may include at least one of the following steps.

In a configuration step, the forthcoming protocol data unit session or PDU session may be configured by setting a Subscription Information Element to support Ethernet frames for data transmission. More specifically, the PDU session type may be configured in the Subscription Information Element to a default PDU Session Type set to »Ethernet« according to table 5.2.3.3.1-1 captioned »UE Subscription data types« in the technical specification 3GPP TS 23.502 V19.1.0 (2024-09) as edited by the 3rd Generation Partnership Project Technical Specification, version 19.1.0, published in September 2024, hereinafter referred to as the '502 specification. This configuration step may be instituted by OAM functions situated in the management plane of the 3GPP communication network, which is not shown in FIG. 5. The PDU Session may be established when one of the networks LANA, LANB or the singly attached node SAN are network-externally connected - i.e. outside the protocol data unit session delineated by the dashed box - to one of a user equipment UE1, UE2.

In a configuration step, one or specific network names may be associated with the forthcoming protocol data unit or PDU session and the specific network name may be reserved to facilitate data exchange complying with a communication protocol of the connected networks LANA, LANB with redundant communication paths. More specifically, in the configuration as shown in FIG. 5, the network name of the data network associated with the PDU Session by the second user entity UE2 may be set to »LANB« while the network name of the data network associated with the PDU Session by the first user entity UE1 may be set to »LANA«. The second configuration step may also be instituted by functions for operations, administration, and maintenance or OAM functions in the management plane.

One of the user plane functions UPF1, UPF2 - preferably the user plane function closest to the to the singly attached node SAN, which, in the embodiment shown in FIG. 5, is the first user plane function UPF1 - may now serve as a PRP link redundancy engine LRE. A Packet Detection Rule of the user plane functions UPF1 may be added or amended so that the Packet Detection Rule may detect a PRP trailer in an PRP frame. One way of adding or amending such a Packet Detection Rule is to augment a packet filter set as specified in clause 5.7.6 of the '501 specification. The packet filter set may be augmented to include a PRP trailer field PTG as shown in FIG. 3.

The first user plane function UPF1 may extract the local area network identifier field LID as shown in FIG. 4 from the PRP trailer field PTG in order to identify the first local area network LANA by a binary value of 1010 and the second local area network LANB by a binary value of 1011. The first user plane function UPF1 may, additionally or alternatively, extract the sequence number field SNO from the PRP trailer field PTG for evaluating the unique sequence number assigned to each PRP frame to help identify and discard duplicate frames.

Furthermore, a forwarding mechanism of the user plane function UPF1 may be extended so that PRP trailers may be added to and stripped from Ethernet frames when they are sent by the singly attached node or SAN into the 5G System and/or when frames are sent from the 5G System to the singly attached node or SAN, respectively. A capability of the user plane function UPF1 to perform this function may be indicated in the action attribute of the Forwarding Action Rule. UPF parameters may be chosen in accordance with clause 5.8.5 of the '501 specification.

According to an embodiment one or more user plane functions UPF1, UPF2 may implement a duplicate accept mode for testing in accordance with section 4.1.10.1 and section 4.2.6 of IEC 62439-3. According to another embodiment one or more user plane functions UPF1, UPF2 may implement a duplicate discard mode in accordance with section 4.1.10.2 and section 4.2.7 of IEC 62439-3. According to another embodiment one or more user plane functions UPF1, UPF2 may send supervision frames in accordance with clause 4.3 of IEC 62439-3.

FIG. 5 further illustrates a series of reference points, depicted as small circles along lines connecting various rectangular-shaped functional units within the 5G system. These reference points are briefly elucidated below:
- A first reference point N1 serves non-access stratum signaling - i.e. signaling protocols and procedures that support the control and management of the user equipment, independent of a radio access network - between the user equipment UE1, UE2 and the access and mobility management function AMF for handling registration, connection, and session management.
- A second reference point N2 serves as the control plane interface between a next-generation Node B gNB1, gNB2 of the radio access network and the Access and Mobility Management Function AMF.
- A third second reference point N3 provides user plane connectivity between the next-generation Nodes B gNB1, gNB2 of the radio access network and the user plane functions UPF1, UPF2.
- A fourth reference point N4 connects the session management function SMF with the user plane functions UPF1, UPF2 to manage user plane packet forwarding, quality of service (QoS) flows, and session contexts.
- A sixth reference point N6 connects the user plane function UPF1 to the singly attached node SAN or to a non-PRP data network for forwarding user data to external networks, such as the internet or private enterprise networks.
- An eleventh reference point N11 connects the access and mobility management function AMF to the session management function SMF for managing tasks such as creating, updating, and terminating protocol data unit PDU sessions.
- A reference point Uu connects the user equipment UE1, UE2 and the next-generation Nodes B gNB1, gNB2 of the radio access network for handling radio communication between the user equipment UE1, UE2 and the network, facilitating both control and user data transmission.

The singly attached node SAN exemplary shown in FIG. 5 may be replaced by a non-PRP Ethernet network which may either connect to one or more singly attached nodes or be terminated by one or more singly attached nodes.

According to the embodiment as shown in FIG. 5, the user equipment instances UE1, UE2 may be added to a 5G virtual network group enabling UE-to-UE communication via the one or both of the user plane functions UPF1, UPF2. The details of a 5G virtual network group are further explained in clause 5.8.2.13 of the '501 specification, which is incorporated by reference. The user plane function UPF1, UPF2 may hereby be configured to utilize different traffic forwarding methods for routing traffic between the protocol data unit or PDU sessions within a single 5G virtual network group. Frame flows may be forwarded locally depending on a destination address.

The above-described embodiment in which user equipment UE1, UE2 and the data network are made members of a 5G Virtual-Network Group and frames between UPF1 and UPF 2 may be forwarded via the reference point N19 may be alternatively realized using selective traffic routing according to clause 5.6.4 of the '501 reference. For implementing the present embodiments using selective traffic routing - an alternative embodiment which is not shown in FIG. 5 - the reference point N19 may be replaced by a reference point N9 without a need to establish a 5G virtual Network group. In order to ensure that frames designated for either local area network LANA, LANB - which are utilized for at least two branches for transporting redundant network traffic - are indeed transported over disjunct paths, it may be beneficial to configure the redundant user plane paths non-overlapping, specifically, to terminate user plane paths in two or more separate user equipment.

Advantageous embodiments may include setting a Packet Delay Budget and/or a Priority Level in one or more policy and charging control rules or PCC rules to a respective parameter in order to enable expedited transmission of PRP frames exchanged via the network LANA, LANB utilized for respectively transporting redundant network traffic. According to an embodiment, corresponding 5G QoS Identifiers or 5QI as specified in table 5.7.4-1 of the '501 specification may be utilized for setting parameters for the Packet Delay Budget and/or the Priority Level to a values suitable for an industrial setting. For example, this may involve setting a low metric of Packet Delay Budget and to a high metric for the Priority Level. More specifically, according to an embodiment, 5G QoS Identifiers or 5QI value of 82 or 83 (»Discrete Automation«), 84 (»Intelligent Transport Systems«), or 85 (»Electricity Distribution high voltage«) may be configured to a respective parameter in order to facilitate expedited transmission of PRP frames.

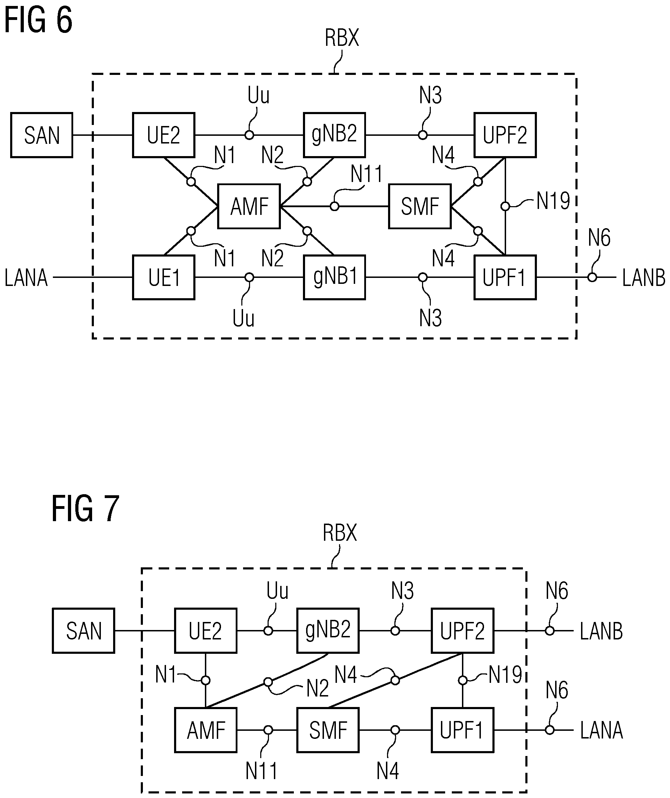

FIG. 6 illustrates a schematic diagram of a mobile communication system operated as a PRP redundancy box according to a second embodiment. Unlike the first embodiment shown in FIG. 5, the second embodiment depicted in FIG. 6 utilizes a second user equipment UE2 to connect the singly attached node SAN. According to FIG. 6, the singly attached node SAN is still situated in the data network, albeit now connected »behind« the second user equipment UE2. Behind the second user equipment UE2 may specifically refer to a network-externally connection referring to the protocol data unit session.

As in the first embodiment shown in FIG. 5, the first network LANA remains connected to the first user equipment UE1 in the second embodiment depicted in FIG. 6

The second network LANB is now connected via the reference point N6 of the first user plane function UPF1. While the second network LANB is now connected to the first user plane function UPF1, the first user plane function UPF1 may retain its role as link redundancy engine LRE of the redundancy box RBX in accordance with the first embodiment shown in FIG. 5.

Both user equipment instances UE1, UE2 and the data network behind the first user plane function UPF1 may be added to a 5G virtual network group enabling UE-to-UE communication via the user plane function UPF1. Frames between the first user plane function UPF1 and the second user plane function UPF2 may be exchanged via the reference point N19 according to clause 5.8.2.13 of the '501 specification, which is incorporated by reference.

One of the user plane functions UPF1, UPF2, preferably the first user plane function UPF1 acting as link redundancy engine LRE, may be configured to utilize different traffic forwarding methods for routing traffic between the protocol data unit or PDU sessions within the 5G virtual network group. Frame flows may be forwarded locally depending on a destination address.

The PDU Sessions of the user equipment instances UE1, UE2 do not necessarily need to connect to the same user first plane function UPF1 as illustrated in the drawing. The 5G virtual network functionality may alternatively support frame forwarding between the instances - not shown in the drawing - of user plane function UPF1, UPF2. In order to achieve a desired packet or frame flow as detailed above, the second embodiment may include the same configuration steps as the first embodiment as shown in FIG. 5.

The second embodiment may alternatively be realized by using selective traffic routing according to clause 5.6.4 of the '501 reference in accordance with the above description for the first embodiment. The second embodiment may include a configuration to ensure that frames designated for either network LANA, LANB are indeed transported over disjunct paths in accordance with the above description for the first embodiment.

The second embodiment may include setting a Packet Delay Budget and/or a Priority Level in one or more policy and charging control rules or PCC rules to a respective parameter in order to enable expedited transmission of PRP frames in accordance with the above description for the first embodiment.

FIG. 7 illustrates a schematic diagram of a mobile communication system operated as a PRP redundancy box according to a third embodiment. Unlike the previous embodiments shown in FIG. 5 and FIG. 6, both networks LANA, LANB are now connected to the user plane functions UPF1, UPF2 in accordance with the third embodiment. Consequently, the networks LANA, LANB are connected to the 5G system RBX via a respective reference point N6 provided by the respective user plane function UPF1, UPF2. In accordance with the previous second embodiment shown in FIG. 6, the singly attached node SAN remains connected behind the second user equipment UE2.

Unlike the previous embodiments shown in FIG. 5 and FIG. 6, the second user plane function UPF2 is now designated to act as the link redundancy engine LRE. While the specific assignment of the Link Redundancy Engine LRE to either of the two interconnected user plane functions UPF1, UPF2, each connected to a data network LANA, LANB, may appear inconsequential, the change in assignment according to the third embodiment may illustrate that such an assignment is always feasible. The designation of the link redundancy engine LRE to a specific one of the user plane functions UPF1, UPF2 may be selected or modified at any time, contingent upon specific requirements of the environment surrounding the mobile communication system or 5G system RBX.

Both data networks of the networks LANA, LANB are connected to the 5G system RBX via a respective reference point N6 as part of the 5G virtual network group and by forwarding packets between UPF1 and UPF2 via the reference point N19.

A deployment according to this third embodiment may also leverage selective traffic routing for switching Ethernet frames from and to the first user plane function UPF1. Selective traffic routing may be utilized to exchange Ethernet frames to and from the first user plane function UPF1. The first user plane function UPF1, handling selective traffic routing, may serve as a collaborative partner for the second user plane function UPF2, which may be advantageously focused on functions of a link redundancy engine LRE.

The third embodiment may include mapping frames designated for an exchange via the first and the second networks LANA, LANB onto high-priority QoS flows in order to enable expedited transmission of PRP frames via the first and the second networks LANA, LANB in accordance with the above description for the first embodiment.

Having elucidated embodiments of PRP redundancy boxes as shown in FIG. 5, FIG. 6, and FIG. 7 the following section will describe additional advantageous embodiments being capable of further enhancing the aforementioned configurations in a beneficial manner.

According to an embodiment, The PRP PDU Sessions may be mapped onto exclusive network slices. By so doing, more than one PRP network may be hosted by the same 5G Network. Additionally or alternatively, network resources may be dedicated to the PRP network(s).

According to an embodiment, PRP or Parallel Redundancy Protocol aspects of the user Equipment UE subscription may be configured by a 5G-System-external Application Function via a network exposure function or NEF. The network exposure function may act as a secure gateway, enabling external applications to interact with the 5G core network. It exposes network services and capabilities through standardized APIs, ensuring secure and controlled access.

According to an embodiment, the PRP policy and charging control or PCC rules for the User Equipment may be configured by a 5G-System-external Application Function via the network exposure function or NEF.

According to an embodiment, a 3GPP radio access to at least one user equipment UE may be replaced with a non-3GPP access applying a method as outlined in clause 4.2.8 and clause 5.5 of the '501 specification.

According to an embodiment, the 3GPP radio access to at least one user equipment UE may be replaced with a combination of non-3GPP access and 3GPP radio access, wherein said combination may also be referred to as Access Traffic Steering, Switching, and Splitting as outlined in clause 4.2.10 and clause 5.32 of the '501 specification.

According to an embodiment, the user plane function acting as the link redundancy engine LRE of the redundancy box RBX may be configured using the Simple Network Management Protocol or SNMP.

According to an embodiment, the 5G user plane function acting as the link redundancy engine LRE of the redundancy box RBX may be configured according to the standard document IEC 61805:2023, »Telecommunications and information exchange between systems - Requirements for 5G Logical Radio Equipment configuration via SNMP«.

According to an embodiment, the 5G LRE may support a Duplicate Accept mode according to section 4.1.10.1 of the IEC 62439-3 document.

According to an embodiment, the user plane function acting as the link redundancy engine LRE of the redundancy box RBX may be configured so as to use the same multicast MAC address for PRP network supervision as the other PRP nodes in the network. For more details see sections 4.2.3 and 4.3 of the IEC 62439-3 document. Section 4.2.3 of the IEC 62439-3 document focuses on the detailed specifications and operational principles of the Parallel Redundancy Protocol (PRP) to ensure seamless redundancy by duplicating data packets and transmitting them over two separate networks. This section covers the mechanisms for detecting and handling errors, ensuring that the system can recover from single points of failure without any data loss or delay. Additionally, it describes the process of frame duplication and the role of the Redundancy Control Trailer or RCT in managing these frames. Section 4.3 describes an implementation of a Duplicate Discard algorithm for preventing the processing of duplicate frames and the synchronization of clocks across the network to maintain precise timing and coordination.

According to an embodiment, the 5G LRE may submit PRP supervision frames according to section 4.3.3 of the IEC 62439-3 document. Supervision frames may contribute for monitoring health and status of the network. These frames may be sent periodically sent by each node to both networks LANA, LANB to ensure continuous communication and redundancy. The supervision frames may contain information about the sender's identity and the status of the links, allowing nodes to detect any failures or issues in the network. By analyzing the received supervision frames, nodes may determine the operational status of their peers and the overall network health.

In summary, the proposed embodiments facilitate an operation of communication nodes within a 3GPP mobile communication network while enabling the integration of these communication nodes into industrial communications with redundant communication paths. According to one embodiment, a Protocol Data Unit or PDU session in a mobile communication network is configured so that the mobile communication system functions as a communication node that supports redundant communication paths. While known PDU sessions are typically utilized to provide end-to-end user plane connectivity between User Equipment or UE and a specific data network within a 3GPP mobile communication network, the present embodiments employ an extended User Plane Function (UPF) resulting in a 3GPP communication network with novel redundant connectivity options capable of participating in established industrial implementations of redundant communication paths, such as the Parallel Redundancy Protocol or PRP. The 3GPP mobile communication network or subareas of said 3GPP mobile communication network thereby acts as a redundancy box in conformance with the PRP protocol.

In summary, the proposed embodiments facilitate an operation of communication nodes within a 3GPP mobile communication network while enabling the integration of these communication nodes into industrial communications with redundant communication paths. According to one embodiment, Protocol Data Unit or PDU sessions in a mobile communication network are configured so that the mobile communication system functions as a communication node that supports redundant communication paths. While known PDU sessions are typically utilized to provide end-to-end user plane connectivity between User Equipment or UE and a specific data network within a 3GPP mobile communication network, the present embodiments employ an extended User Plane Function (UPF) resulting in a 3GPP communication network with novel redundant connectivity options capable of participating in established industrial implementations of redundant communication paths, such as the Parallel Redundancy Protocol or PRP. The 3GPP mobile communication network or subareas of said 3GPP mobile communication network may act as a redundancy box in conformance with the PRP proto

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for operating a mobile 3GPP communication network to facilitate data exchange between at least three endpoints of the 3GPP communication network, with at least two endpoints being network-externally connected to redundant network paths and at least one endpoint being network-externally connected to at least one non-redundant network path, the method including the steps of:
- setting up at least one protocol data unit session by setting its session type to support Ethernet frames for data transmission and associating a specific network name being utilized for frames exchanged with one of the redundant network paths;
- receiving an incoming frame from at least one of said redundant network paths and detecting a trailer in the incoming frame to determine the incoming frame as being compliant with the redundant communication protocol;
- reading a sequence number field and a local area network identifier field of the trailer to identify and/or discard a duplicate frame; and;
- providing at least one detection rule to assign at least one forwarding action rule to be applied to the incoming frame.

2. The method according claim 1, wherein identifying a duplicate frame includes evaluating the sequence number of the incoming frame.

3. The method according claim 2, wherein evaluating the sequence number includes comparing the sequence number of the incoming frame with at least one sequence number of at least one previously incoming frame.

4. The method according to one of the aforementioned claims, including the steps of:
- receiving an incoming frame from at least one of said non-redundant network paths;
- creating a sequence number and appending a trailer to the incoming frame, the trailer including the created sequence number; and;
- creating a duplicate frame of the incoming frame, amending the local area network identifier field of the duplicate frame according to a destination network path of the duplicate frame and forwarding the incoming frame and the duplicate frame to the redundant network paths.

5. The method according to one of the aforementioned claims, wherein the redundant communication protocol is a Parallel Redundancy Protocol or PRP.

6. The method according to one of the aforementioned claims, including the step of adjusting at least one parameter assigned to a service data flow template, the at least one parameter determining a packet delay budget and/or a priority level according to an industrial setting.

7. The method according to one of the aforementioned claims, including the step of adding at least one instance of a user equipment and/or or at least one instance of a user plane function to a virtual network group enabling a frame flow between one or more of said instances.

8. The method according to one of the aforementioned claims, wherein the at least one protocol data unit session is configured to support a Precision Time Protocol or PTP.

9. A redundancy box embodied by a mobile 3GPP communication network configured to facilitate data exchange between at least three endpoints, with at least two endpoints being network-externally connected to redundant network paths and at least one endpoint being network-externally connected to at least one non-redundant network path, the redundancy box including:
- at least one user plane function configured to set up the protocol data unit session by setting its session type to support Ethernet frames for data transmission and associating a specific network name being utilized for frames exchanged with one of the redundant network paths;
- one of said at least two endpoints configured to receive an incoming frame;
- the user plane function further configured to detect a trailer in the incoming frame to determine the incoming frame as being compliant with the redundant communication protocol, to read a sequence number field and a local area network identifier field of the trailer to identify and/or discard a duplicate frame; and;
- at least one detection rule of the user plane function for assigning at least one forwarding action rule to be applied to the incoming frame.
